# EUROPEAN PATENT SPECIFICATION

(11) **EP 4 354 532 B1**
(45) Date of publication and mention of the grant of the patent: **26.08.2026**
(21) Application number: 22871479.6
(22) Date of filing: 14.06.2022
(51) Int. Cl.: H01M 4/13, H01M 50/103, H01M 10/0525

(54) **ELECTRODE ASSEMBLY, BATTERY CELL, BATTERY, AND ELECTRIC APPARATUS**
ELEKTRODENANORDNUNG, BATTERIEZELLE, BATTERIE UND ELEKTRISCHE VORRICHTUNG
ENSEMBLE ÉLECTRODE, CELLULE DE BATTERIE, BATTERIE ET APPAREIL ÉLECTRIQUE

(30) Priority: 27.09.2021 CN 202111137435
(43) Date of publication of application: 17.04.2024
(73) Proprietor: Contemporary Amperex Technology (Hong Kong) Limited, Central, Central And Western District (HK)
(72) Inventor: HE, Jianfu, Ningde City, Fujian 352100 (CN); LIU, Qian, Ningde City, Fujian 352100 (CN); YE, Yonghuang, Ningde City, Fujian 352100 (CN); JIN, Haizu, Ningde City, Fujian 352100 (CN); ZHANG, Tao, Ningde City, Fujian 352100 (CN); SUN, Xueyang, Ningde City, Fujian 352100 (CN)
(74) Representative: Lorenz Seidler Gossel Part. mbB
(86) International application number: PCT/CN2022/098724
(87) International publication number: WO 2023/045418

(56) References cited:
- CN-A- 106 531 961
- CN-A- 114 497 445
- CN-U- 207 338 527
- CN-U- 207 490 009
- JP-A- 2001 176 558
- JP-A- 2002 015 764
- JP-A- 2009 199 796
- JP-A- 2013 134 977

## Description

### TECHNICAL FIELD

This application relates to the field of battery technologies, and in particular, to an electrode assembly, a battery cell, a battery, and an electric apparatus.

### BACKGROUND

With outstanding advantages such as high energy density, low environmental pollution, high power density, long service life, wide application range, and small self-discharge coefficient, lithium-ion batteries have been one of the most widely used battery types in the world and an important part of new energy development. A lithium-ion battery cell is obtained by making a positive electrode plate, a negative electrode plate, and a separator into an electrode assembly (a bare cell) through winding or stacking, placing the electrode assembly into a housing, and then injecting electrolyte. As lithium-ion batteries continue to develop, requirements for longer cycle life and higher energy density of batteries become more stringent. However, existing batteries are exposed to high safety risks as the battery cycle life and energy density are improved.

Document JP 2002 015764 A shows an electrode assembly according to the preamble of claim 1.

Further prior art is known from JP2001176558A and CN207338527U.

### SUMMARY

The invention is defined in the claims. Embodiments of this invention provide an electrode assembly, a battery cell, a battery, and an electric apparatus, which can effectively reduce safety risks of batteries.

According to a first aspect, an embodiment of this invention provides an electrode assembly including a negative electrode plate and a positive electrode plate. The negative electrode plate includes a negative electrode active substance layer, and a first electrolyte storage trough is disposed on the negative electrode active substance layer. The positive electrode plate includes a positive electrode active substance layer. The positive electrode active substance layer and the negative electrode active substance layer are disposed opposite each other in a first direction. A second electrolyte storage trough is disposed on the positive electrode active substance layer. The second electrolyte storage trough and the first electrolyte storage trough are disposed opposite each other in the first direction.

In the foregoing technical solution, the negative electrode active substance layer and the positive electrode active substance layer are disposed opposite each other in the first direction. The first electrolyte storage trough is disposed on the negative electrode active substance layer, the second electrolyte storage trough is disposed on the positive electrode active substance layer, and the first electrolyte storage trough and the second electrolyte storage trough are disposed opposite each other in the first direction. In this way, the first electrolyte storage trough and the second electrolyte storage trough jointly define an electrolyte storage space between the adjacent negative electrode plate and positive electrode plate. The electrode assembly with such structure can store electrolyte. This can improve the electrolyte retention capability of the negative electrode plate and the positive electrode plate, so that the electrolyte in the first electrolyte storage trough and the second electrolyte storage trough can be released fast during discharging to immerse the negative electrode active substance layer and the positive electrode active substance layer in the nearby area, thereby ensuring that the negative electrode plate and the positive electrode plate are fully immersed and reducing the polarization risk of the negative electrode plate and the positive electrode plate. In addition, less space is occupied by the first electrolyte storage trough on the negative electrode active substance layer of the negative electrode plate and by the second electrolyte storage trough on the positive electrode active substance layer of the positive electrode plate, while the same electrolyte storage effects are achieved. This helps alleviate the problem of energy density loss of the electrode assembly caused by an excessive reduction in the positive electrode active substance layer of the positive electrode plate, and helps reduce the risk of lithium precipitation on the electrode assembly caused by an excessive reduction in the negative electrode active substance layer of the negative electrode plate, thus achieving good capacity and safety performance of the battery cell at the same time.

Further, according to the present invention, a width of the first electrolyte storage trough is less than width of the second electrolyte storage trough.

In the foregoing technical solution, the width of the first electrolyte storage trough is set to be less than the width of the second electrolyte storage trough. In other words, in the region where the first electrolyte storage trough and the second electrolyte storage trough are disposed opposite each other, area of the negative electrode active substance layer is larger than that of the positive electrode active substance layer, so that the negative electrode active substance layer in this region is abundant to accommodate and receive lithium ions precipitated from the positive electrode active substance layer. In this way, local lithium precipitation of the electrode assembly can be alleviated during subsequent use, thereby helping reduce the safety risk of the battery cell and extend the cycle life of the battery cell. In addition, the electrode assembly with such structure can satisfy manufacturing tolerances, so that misplacement of the first electrolyte storage trough and the second electrolyte storage trough can be effectively reduced during winding or stacking of the negative electrode plate and the positive electrode plate, thus reducing the risk of lithium precipitation in the region where the first electrolyte storage trough is located.

In some embodiments, depth of the first electrolyte storage trough is the same as depth of the second electrolyte storage trough.

In the foregoing technical solution, the depth of the first electrolyte storage trough is set to be the same as the depth of the second electrolyte storage trough. This facilitates manufacturing and production. In addition, on the premise that the width of the first electrolyte storage trough is less than the width of the second electrolyte storage trough, this ensures that the unit active substance density of the negative electrode active substance layer is greater than that of the positive electrode active substance layer in the region where the first electrolyte storage trough and the second electrolyte storage trough are located, further reducing the risk of lithium precipitation on the electrode assembly during subsequent use.

In some embodiments, a difference between the width of the first electrolyte storage trough and the width of the second electrolyte storage trough is not less than 1 mm.

In the foregoing technical solution, the difference between the width of the first electrolyte storage trough and the width of the second electrolyte storage trough is set to be not less than 1 mm. In other words, the width of the second electrolyte storage trough is greater than the width of the first electrolyte storage trough by more than 1 mm, so that the negative electrode active substance layer in this region is so abundant that the negative electrode active substance layer has sufficient active sites to accommodate and receive the lithium ions precipitated from the positive electrode active substance layer.

In some embodiments, a ratio of the depth of the first electrolyte storage trough to the thickness of the negative electrode active substance layer is 0.01-0.2; and/or a ratio of the depth of the second electrolyte storage trough to the thickness of the positive electrode active substance layer is 0.01-0.2.

In the foregoing technical solution, the ratio of the depth of the first electrolyte storage trough to the thickness of the negative electrode active substance layer is set to 0.01-0.2, and likewise, the ratio of the depth of the second electrolyte storage trough to the thickness of the positive electrode active substance layer is set to 0.01-0.2. This can alleviate the problem of poor electrolyte storage effect caused by the first electrolyte storage trough and the second electrolyte storage trough being excessively shallow, and can also reduce the difficulty of using the active substances on the bottom walls of the first electrolyte storage trough and second electrolyte storage trough during charging and discharging caused by the first electrolyte storage trough and the second electrolyte storage trough being excessively deep, thus helping reduce polarization of the electrode assembly.

In some embodiments, in an extending direction of the first electrolyte storage trough, the first electrolyte storage trough runs through two ends of the negative electrode active substance layer; and/or in an extending direction of the second electrolyte storage trough, the second electrolyte storage trough runs through two ends of the positive electrode active substance layer.

In the foregoing technical solution, two ends of the first electrolyte storage trough extend through two ends of the negative electrode active substance layer respectively; likewise, two ends of the second electrolyte storage trough extend through two ends of the positive electrode active substance layer respectively. In other words, the first electrolyte storage trough and the second electrolyte storage trough are designed as open troughs, so that the electrolyte can enter the first electrolyte storage trough and the second electrolyte storage trough through the two ends of the first electrolyte storage trough and the second electrolyte storage trough. This helps increase the reflux rate of electrolyte during the discharging process, allowing the negative electrode plate and the positive electrode plate to be fully immersed in the electrolyte, thus further alleviating the polarization of the electrode assembly.

In some embodiments, the extending direction of the first electrolyte storage trough is the same as the extending direction of the second electrolyte storage trough.

In the foregoing technical solution, the first electrolyte storage trough and the second electrolyte storage trough extend in the same direction, facilitating manufacturing and production of the electrode assembly and allowing the first electrolyte storage trough and the second electrolyte storage trough to be disposed opposite each other in the first direction.

In some embodiments, the first electrolyte storage trough extends in a length direction of the negative electrode plate, and the second electrolyte storage trough extends in a length direction of the positive electrode plate.

In some embodiments, in a width direction of the negative electrode active substance layer, the first electrolyte storage trough is disposed at a center position of the negative electrode active substance layer, and in a width direction of the positive electrode active substance layer, the second electrolyte storage trough is disposed at a center position of the positive electrode active substance layer.

In the foregoing technical solution, the first electrolyte storage trough is disposed at the center position in the width direction of the negative electrode active substance layer, and the second electrolyte storage trough is disposed at the center position in the width direction of the positive electrode active substance layer. This can improve the electrolyte storage and retention capability at the center positions of the negative electrode active substance layer and the positive electrode active substance layer, thus accelerating the electrolyte immersion at the center positions of the negative electrode active substance layer and the positive electrode active substance layer.

In some embodiments, both the first electrolyte storage trough and the second electrolyte storage trough are provided in plurality. The plurality of first electrolyte storage troughs are spaced apart in a width direction of the negative electrode plate, and the plurality of second electrolyte storage troughs are spaced apart in a width direction of the positive electrode plate, the first electrolyte storage troughs corresponding to the second electrolyte storage troughs on a one-to-one basis.

In the foregoing technical solution, a plurality of first electrolyte storage troughs are spaced apart in the width direction of the negative electrode plate, and correspondingly a plurality of second electrolyte storage troughs are spaced apart in the width direction of the positive electrode plate. This helps further improve the electrolyte storage and retention capability of the negative electrode active substance layer and the positive electrode active substance layer. This allows the negative electrode active substance layer and the positive electrode active substance layer to be fully immersed in the electrolyte during the discharging process, thus helping reduce safety risks such as lithium precipitation of the electrode assembly.

In some embodiments, the first electrolyte storage trough extends in a width direction of the negative electrode plate, and the second electrolyte storage trough extends in a width direction of the positive electrode plate.

In some embodiments, both the first electrolyte storage trough and the second electrolyte storage trough are provided in plurality. The plurality of first electrolyte storage troughs are spaced apart in a length direction of the negative electrode plate, and the plurality of second electrolyte storage troughs are spaced apart in a length direction of the positive electrode plate, the first electrolyte storage troughs corresponding to the second electrolyte storage troughs on a one-to-one basis.

In the foregoing technical solution, a plurality of first electrolyte storage troughs are spaced apart in the length direction of the negative electrode plate, and correspondingly a plurality of second electrolyte storage troughs are spaced apart in the length direction of the positive electrode plate. This helps further improve the electrolyte storage and retention capability of the negative electrode active substance layer and the positive electrode active substance layer, allowing the negative electrode active substance layer and the positive electrode active substance layer to be fully immersed in the electrolyte during the discharging process, thus helping reduce safety risks such as lithium precipitation of the electrode assembly.

In some embodiments, the negative electrode plate further includes a negative electrode current collector, and the negative electrode current collector is provided with the negative electrode active substance layer on both sides in the first direction; and the positive electrode plate further includes a positive electrode current collector, and the positive electrode current collector is provided with the positive electrode active substance layer on both sides in the first direction.

In the foregoing technical solution, the negative electrode plate has the negative electrode current collector, and the negative electrode current collector is provided with the negative electrode active substance layer on both sides in the first direction so that the negative electrode plate is provided with the first electrolyte storage trough on both sides in the first direction. Likewise, the positive electrode plate has the positive electrode current collector, and the positive electrode current collector is provided with the positive electrode active substance layer on both sides of the first direction so that the positive electrode plate is provided with the second electrolyte storage trough on both sides in the first direction. In this way, the reflux rate and immersion rate of electrolyte can be increased on both sides of the negative electrode plate and the positive electrode plate in the first direction, helping extend the cycle life of the electrode assembly while guaranteeing the energy density of the electrode assembly.

According to a second aspect, an embodiment of this invention further provides a battery cell including a housing and the foregoing electrode assembly. The housing is configured to accommodate the foregoing electrode assembly.

According to a third aspect, an embodiment of this invention further provides a battery including a box and the foregoing battery cells. The box is configured to accommodate the foregoing battery cells.

According to a fourth aspect, an embodiment of this invention further provides an electric apparatus including the foregoing battery. The battery is configured to supply electric energy.

### BRIEF DESCRIPTION OF DRAWINGS

In order to describe the technical solutions in the embodiments of this application more clearly, the following briefly describes the accompanying drawings required for describing the embodiments. It should be appreciated that, the accompanying drawings below only show some embodiments of this application.
FIG 1 is a schematic structural diagram of a vehicle according to some embodiments of this application;
FIG 2 is an exploded view of a battery according to some embodiments of this application;
FIG 3 is a structural exploded view of a battery cell according to some embodiments of this application;
FIG 4 is a schematic structural diagram of an electrode assembly according to some embodiments of this application;
FIG 5 is a partial cross-sectional view of an electrode assembly according to some embodiments of this invention
FIG 6 is a schematic structural diagram of a negative electrode plate of an electrode assembly according to some embodiments of this application;
FIG 7 is a schematic structural diagram of a positive electrode plate of an electrode assembly according to some embodiments of this application;
FIG 8 is a schematic structural diagram of a negative electrode plate of an electrode assembly according to some embodiments of this application in other embodiments;
FIG 9 is a schematic structural diagram of a negative electrode plate of an electrode assembly according to some other embodiments of this application;
FIG 10 is a schematic structural diagram of a positive electrode plate of an electrode assembly according to some other embodiments of this application;
FIG 11 is a partial cross-sectional view of an electrode assembly according to still some other embodiments of this invention and
FIG 12 is a partial cross-sectional view of an electrode assembly according to still some other embodiments of this invention in other embodiments.

Reference signs: 1000. vehicle; 100. battery; 10. box; 11. first part; 12. second part; 20. battery cell; 21. housing; 211. housing body; 212. cover; 213. sealed space; 22. electrode assembly; 221. negative electrode plate; 2211. negative electrode active substance layer; 2212. first electrolyte storage trough; 2213. negative electrode current collector; 222. positive electrode plate; 2221. positive electrode active substance layer; 2222. second electrolyte storage trough; 2223. positive electrode current collector; 223. separator; 23. positive electrode terminal; 24. negative electrode terminal; 25. pressure relief mechanism; 200. controller; 300. motor; and x. first direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application.

Unless otherwise defined, all technical and scientific terms used in this application shall have the same meanings as commonly understood by those skilled in the art to which this application belongs. The terms used in the specification of this application are merely intended to describe the specific embodiments but not intended to constitute any limitation on this application. The terms "include", "comprise", and any variations thereof in the specification and claims of this application and the foregoing description of the drawings are intended to cover non-exclusive inclusions. In the specification, claims, or accompanying drawings of this application, the terms "first", "second", and the like are intended to distinguish between different objects but do not indicate a particular order or a subordinate relationship.

An "embodiment" mentioned in this application means that specified features, structures, or characteristics described with reference to this embodiment may be included in at least one embodiment of this application. The word "embodiment" in various positions in the specification does not necessarily refer to the same embodiment, or an independent or alternative embodiment that is exclusive of other embodiments.

In the descriptions of this application, it should be noted that unless otherwise specified and defined explicitly, the terms "installment", "link", "connection", and "attachment" should be understood in their general senses. For example, the terms may be a fixed connection, a detachable connection, or an integrated connection, or may be a direct connection, an indirect connection through an intermediate medium, or an internal connection between two elements. A person of ordinary skills in the art can understand specific meanings of these terms in this application based on specific situations.

The term "and/or" in this application describes only an association relationship for describing associated objects and represents that three relationships may exist. For example, A and/or B may represent the following three cases: A alone, both A and B, and B alone. In addition, the character "/" in this application generally indicates an "or" relationship between the associated objects.

In the embodiments of this application, the same reference signs denote the same components. For brevity, in different embodiments, detailed descriptions of the same components are omitted. It should be understood that the thickness, length, width and other dimensions of various components in the embodiments of the application shown in the drawings, as well as the overall thickness, length and width of the integrated apparatus, are for illustrative purposes only, and should not constitute any limitation to this application.

In this application, "a plurality of" means two (inclusive) or more.

With outstanding advantages such as high energy density, low environmental pollution, high power density, long service life, wide application range, and small self-discharge coefficient, lithium-ion batteries have been one of the most widely used battery types in the world and an important part of new energy development. A lithium-ion battery cell is obtained by making a positive electrode plate, a negative electrode plate, and a separator into an electrode assembly (a bare cell) through winding or stacking, placing the electrode assembly into a housing, and then injecting electrolyte. The electrode plates are of a sandwich structure, with a current collector in the middle and powder applied on both sides. The active substance layer (the coating layer) is obtained by mixing active substances, a binder, and a conductive agent to form a uniform slurry and applying the slurry. The binder is used to bind the active materials, conductive agent, and current collector together. However, as lithium-ion batteries continue to develop, requirements for longer cycle life and higher energy density of battery cells become more stringent.

The inventors have found that a larger amount of electrolyte is required while the cycle life and energy density of the battery cell is increased. However, excessive electrolyte will reduce the electrolyte storage space in the housing of the battery cell and cause the battery cell to swell, pushing the valve open or resulting in damage. In addition, during charging of the electrode assembly of the battery cell, the swelling of the electrode plates causes the electrolyte between them to be forced out, reducing the electrolyte between the electrode plates and reducing the reflux rate of electrolyte during discharging of the electrode plates This prevents the electrode plates from being fully immersed, leading to polarization. The electrolyte immersion rate in the central regions of the electrode plates is the lowest, and the polarization there is the most serious, causing capacity loss and side reactions, and hindering improvement of the cycle life and energy density of the battery cell. Therefore, it is crucial to ensure an adequate reflux rate of electrolyte for the electrode plates. In the prior art, an electrolyte storage trough is disposed on the positive electrode active substance layer of the positive electrode plate or on the negative electrode active substance layer of the negative electrode plate, so that the electrolyte storage trough can store the electrolyte squeezed out during the charging process, so as to increase the reflux rate of the electrolyte during the discharging process and resolving the problem of the electrode plates not being immersed by the electrolyte. However, provision of the electrolyte storage trough only on the positive electrode active substance layer of the positive electrode plate for ensuring sufficient electrolyte storage space between the positive electrode plate and the negative electrode plate tends to reduce the energy density of the electrode assembly, making it difficult to improve the battery capacity. Provision of the electrolyte storage trough only on the negative electrode active substance layer of the negative electrode plate tends to cause lithium precipitation, resulting in high safety risks of the battery.

In view of the foregoing considerations, the inventors have designed an electrode assembly through in-depth research, to ensure a sufficient electrolyte storage space between the positive electrode plate and the negative electrode plate while resolving the problem that the battery is prone to safety risks. A first electrolyte storage trough is disposed on the negative electrode active substance layer of the negative electrode plate, a second electrolyte storage trough is disposed on the positive electrode active substance layer of the positive electrode plate, and the first electrolyte storage trough and the second electrolyte storage trough are disposed opposite each other in the first direction, so that the first electrolyte storage trough and the second electrolyte storage trough jointly define an electrolyte storage space between the adjacent negative electrode plate and positive electrode plate.

In such electrode assembly, the first electrolyte storage trough and the second electrolyte storage trough for storing electrolyte are disposed on the negative electrode active substance layer of the negative electrode plate and the positive electrode active substance layer of the positive electrode plate respectively, so that electrolyte can be stored in the first electrolyte storage trough and the second electrolyte storage trough during the charging process. In this way, more residual space can be provided for electrolyte, allowing more electrolyte to be injected while relieving deterioration of the residual space. In addition, the electrolyte retention capability of the negative electrode plate and the positive electrode plate is improved, allowing the electrolyte in the first electrolyte storage trough and the second electrolyte storage trough to be released fast during the discharging process to immerse the negative electrode active substance layer and the positive electrode active substance layer in the nearby area. This ensures that the negative electrode plate and the positive electrode plate are fully immersed, thus reducing the polarization risk of the negative electrode plate and the positive electrode plate.

In addition, the first electrolyte storage trough and the second electrolyte storage trough are disposed opposite each other to jointly define an electrolyte storage space, so that less space is occupied by the first electrolyte storage trough on the negative electrode active substance layer of the negative electrode plate and the second electrolyte storage trough on the positive electrode active substance layer of the positive electrode plate while the same electrolyte storage effects are achieved. This helps alleviate the problem of energy density loss of the electrode assembly caused by an excessive reduction in the positive electrode active substance layer of the positive electrode plate, and helps reduce the risk of lithium precipitation on the electrode assembly caused by an excessive reduction in the negative electrode active substance layer of the negative electrode plate, thus achieving good capacity and safety performance of the battery cell at the same time.

The battery cell disclosed in the embodiments of this application may be used without limitation in an electric apparatus such as a vehicle, a ship, or an aircraft. The battery cell, the battery, and the like disclosed in this application may be used to constitute a power supply system for that electric apparatus, which helps alleviate the problem of lithium precipitation on the battery cell and improves the service life and safety of the battery.

An embodiment of this application provides an electric apparatus that uses a battery as a power source. The electric apparatus may be but is not limited to a mobile phone, a tablet computer, a laptop computer, an electric toy, an electric bicycle, an electric vehicle, a ship, or a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, the electric apparatus of an embodiment of the application being a vehicle 1000 is used as an example for description of the following embodiments.

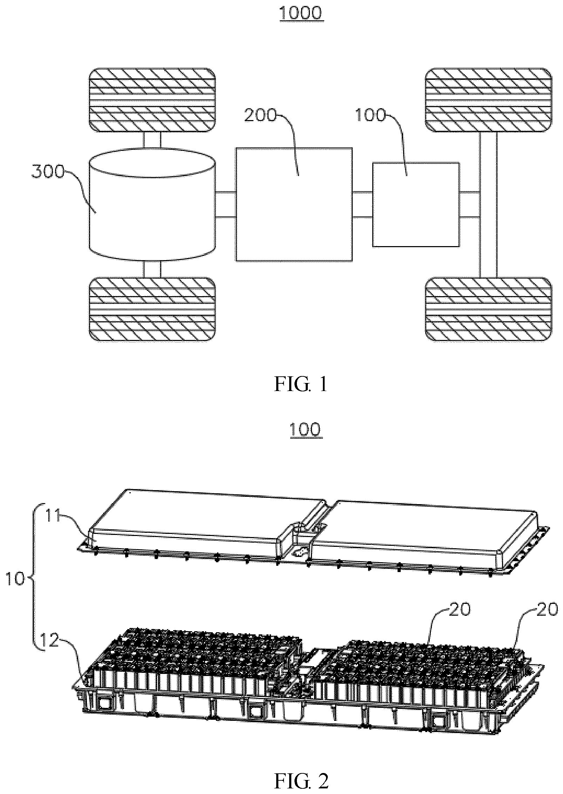

Referring to FIG 1, FIG 1 is a schematic structural diagram of the vehicle 1000 according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG 2, FIG 2 is an exploded view of a battery 100 according to some embodiments of this application. The battery 100 includes a box 10 and battery cells 20, where the box 10 is configured to accommodate the battery cells 20. The box 10 is configured to provide an accommodating space for the battery cells 20, and the box 10 may be of various structures. In some embodiments, the box 10 may include a first part 11 and a second part 12. The first part 11 and the second part 12 fit together so that the first part 11 and the second part 12 jointly define the accommodating space for accommodating the battery cell 20. The second part 12 may be a hollow structure with one end open, and the first part 11 may be a plate structure. The first part 11 covers the open end of the second part 12, so that the first part 11 and the second part 12 jointly define an accommodating space. Alternatively, both the first part 11 and the second part 12 may be a hollow structure with one end open, and the open end of the first part 11 covers the open end of the second part 12. The box 10 formed by the first part 11 and the second part 12 may be in various shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between a plurality of battery cells 20.

Each battery cell 20 may be a secondary battery or a primary battery, a lithium-sulfur battery, a sodium-ion battery, or a magnesium-ion battery, without being limited thereto. The battery cell 20 may be cylindrical, flat, cuboid, or of other shapes.

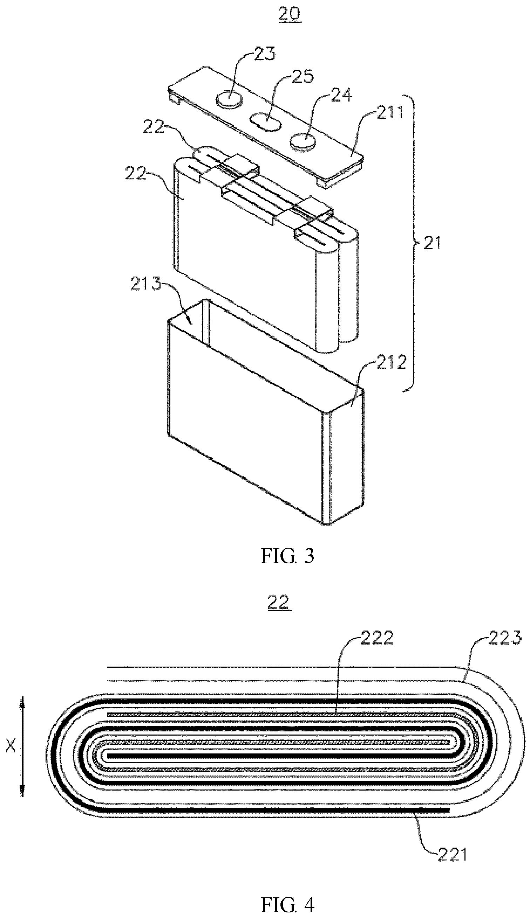

Referring to FIG 3, FIG 3 is a structural exploded view of a battery cell 20 according to some embodiments of this application. The battery cell 20 includes a housing 21 and an electrode assembly 22, where the housing 21 is configured to accommodate the electrode assembly 22.

The housing 21 may also be configured to accommodate an electrolyte such as a liquid electrolyte. The housing 21 may be in various structure forms.

In some embodiments, the housing 21 may include a housing body 211 and a cover 212. The housing body 211 is a hollow structure with an opening on one side, and the cover 212 covers the opening of the housing body 211 to form hermetical connection so as to form a sealed space 213 for accommodating the electrode assembly 22 and the electrolyte.

In assembling of the battery cell 20, the electrode assembly 22 may be put into the housing body 211 first, the electrolyte is injected into the housing body 211, and then the opening of the housing body 211 is covered by the cover 212.

The housing body 211 may be in various shapes, such as a cylindrical shape or a cuboid shape. The shape of the housing body 211 may be determined based on a specific shape of the electrode assembly 22. For example, if the electrode assembly 22 is a cylinder structure, a cylindrical housing body may be selected; and if the electrode assembly 22 is a cuboid structure, a cuboid housing body may be selected. Certainly, the cover 212 may also be of various structures. For example, the cover 212 is a plate structure, a hollow structure with an opening on one end, or the like. For example, in FIG 3, the housing body 211 is a cuboid structure, the cover 212 is a plate structure, and the cover 212 covers the opening of the housing body 211.

In some embodiments, the battery cell 20 may further include a positive electrode terminal 23, a negative electrode terminal 24, and a pressure relief mechanism 25, and the positive electrode terminal 23, the negative electrode terminal 24, and the pressure relief mechanism 25 are all mounted on the cover 212. Both the positive electrode terminal 23 and the negative electrode terminal 24 are configured to electrically connect the electrode assembly 22. The pressure relief mechanism 25 is configured to relieve internal pressure of the battery cell 20 when the internal pressure or temperature of the battery cell 20 reaches a predetermined value.

For example, as shown in FIG 3, the pressure relief mechanism 25 is located between the positive electrode terminal 23 and the negative electrode terminal 24. The pressure relief mechanism 25 may be a component such as an explosion-proof valve, a rupture disk, an air valve, a pressure relief valve, or a security valve.

It should be understood that the housing 21 is not limited to the foregoing structures, and may also be other structures. For example, the housing 21 includes a housing body 211 and two covers 212. The housing body 211 is a hollow structure with an opening on two opposite sides, and the cover 212 covers one opening of the housing body 211 to form hermetical connection so as to form a sealed space 213 for accommodating the electrode assembly 22 and the electrolyte. In this structure, the positive electrode terminal 23 and the negative electrode terminal 24 may be mounted on the same cover 212 or different covers 212. The pressure relief mechanism 25 may be mounted on either or both of the two covers 212.

It should be noted that in the embodiment of this application, the housing 21 may accommodate one or more electrode assemblies 22. For example, in FIG 3, two electrode assemblies 22 are provided.

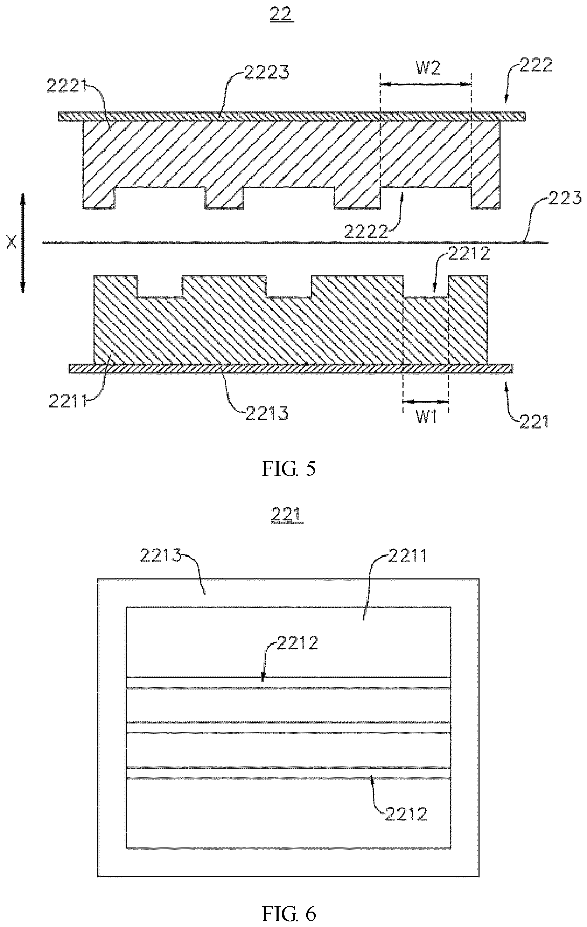

According to some embodiments of this application, referring to FIG 3, FIG 4, and FIG 5, FIG 4 is a schematic structural diagram of an electrode assembly 22 according to some embodiments of this application, and FIG 5 is a partial cross-sectional view of an electrode assembly 22 according to some embodiments of this invention, This application provides an electrode assembly 22. The electrode assembly 22 includes a negative electrode plate 221 and a positive electrode plate 222. The negative electrode plate 221 include a negative electrode active substance layer 2211, and a first electrolyte storage trough 2212 is disposed on the negative electrode active substance layer 2211. The positive electrode plate 222 includes a positive electrode active substance layer 2221, where the positive electrode active substance layer 2221 and the negative electrode active substance layer 2211 are disposed opposite each other in a first direction X, a second electrolyte storage trough 2222 is disposed on the positive electrode active substance layer 2221, and the second electrolyte storage trough 2222 and the first electrolyte storage trough 2212 are disposed opposite each other in the first direction X.

The electrode assembly 22 operates mainly relying on migration of metal ions between the positive electrode plate 222 and the negative electrode plate 221. The positive electrode plate 222 includes a positive electrode current collector 2223 and a positive electrode active substance layer 2221 (a positive electrode coating layer). The positive electrode active substance layer 2221 is applied on a surface of the positive electrode current collector 2223. A positive electrode current collector 2223 without the positive electrode active substance layer 2221 extends beyond a positive electrode current collector 2223 coated with the positive electrode active substance layer 2221, and the positive electrode current collector 2223 without the positive electrode active substance layer 2221 is used as a positive electrode tab. With a lithium-ion battery as an example, its positive electrode current collector 2223 may be made of aluminum and its positive electrode active substance may be lithium cobaltate, lithium iron phosphate, ternary lithium, lithium manganate, or the like. The negative electrode plate 221 includes a negative electrode current collector 2213 and a negative electrode active substance layer 2211 (a negative electrode coating layer). The negative electrode active substance layer 2211 is applied on a surface of the negative electrode current collector 2213. A negative electrode current collector 2213 without the negative electrode active substance layer 2211 extends beyond a negative electrode current collector 2213 coated with the negative electrode active substance layer 2211, and the negative electrode current collector 2213 without the negative electrode active substance layer 2211 is used as a negative electrode tab. The negative electrode current collector 2213 may be made of copper, and a negative electrode active substance may be carbon, silicon, or the like. To allow a high current to pass through without any fusing, a plurality of positive tabs are provided and stacked, and a plurality of negative tabs are provided and stacked.

Referring to FIG 4 and FIG 5, the electrode assembly 22 further includes a separator 223, where the separator 223 is disposed between the positive electrode plate 222 and the negative electrode plate 221. The separator 223 is configured to separate the positive electrode plate 222 from the negative electrode plate 221.

The separator 223 may be made of PP (polypropylene, polypropylene), PE (polyethylene, polyethylene), or the like. In addition, in FIG 4, the electrode assembly 22 is a wound structure. In other embodiments, the electrode assembly 22 may alternatively be a stacked structure. This is not limited in the embodiments of this application.

The first direction X is a thickness direction of the negative electrode plate 221 and the positive electrode plate 222. The positive electrode active substance layer 2221 and the negative electrode active substance layer 2211 are disposed opposite each other in the first direction X. That is, the negative electrode active substance layer 2211 and the positive electrode active substance layer 2221 are disposed opposite each other between every adjacent negative electrode current collector 2213 and positive electrode current collector 2223 in the first direction X. The second electrolyte storage trough 2222 and the first electrolyte storage trough 2212 are disposed opposite each other in the first direction X. That is, in the first direction X, an opening of the first electrolyte storage trough 2212 is provided opposite an opening of the second electrolyte storage trough 2222. The first electrolyte storage trough 2212 and the second electrolyte storage trough 2222 jointly define a space for storing electrolyte.

For example, in FIG 5, both the cross-section of the first electrolyte storage trough 2212 and the cross-section of the second electrolyte storage trough 2222 are rectangular. Certainly, the structures of the first electrolyte storage trough 2212 and the second electrolyte storage trough 2222 are not limited thereto. In other embodiments, the cross-section of the first electrolyte storage trough 2212 and the cross-section of the second electrolyte storage trough 2222 may alternatively be semicircular, trapezoidal, V-shaped, or the like.

The first electrolyte storage trough 2212 is disposed on the negative electrode active substance layer 2211, the second electrolyte storage trough 2222 is disposed on the positive electrode active substance layer 2221, and the first electrolyte storage trough 2212 and the second electrolyte storage trough 2222 are disposed opposite each other in the first direction X, so that the first electrolyte storage trough 2212 and the second electrolyte storage trough 2222 jointly define an electrolyte storage space between the negative electrode plate 221 and the positive electrode plate 222. The electrode assembly 22 with such structure can store electrolyte. On the one hand, the electrolyte retention capability of the negative electrode plate 221 and the positive electrode plate 222 can be improved, so that the electrolyte in the first electrolyte storage trough 2212 and the second electrolyte storage trough 2222 can be released fast during a discharging process to immerse the negative electrode active substance layer 2211 and the positive electrode active substance layer 2221 in the nearby area. This ensures that the negative electrode plate 221 and the positive electrode plate 222 are fully immersed, thus reducing the polarization risk of the negative electrode plate 221 and the positive electrode plate 222. On the other hand, the first electrolyte storage trough 2212 occupies less space on the negative electrode active substance layer 2211 of the negative electrode plate 221 and the second electrolyte storage trough 2222 occupies less space on the positive electrode active substance layer 2221 of the positive electrode plate 222 while the same electrolyte storage effects are achieved. This helps alleviate the problem of energy density loss of the electrode assembly 22 caused by an excessive reduction in the positive electrode active substance layer 2221 of the positive electrode plate 222, and helps reduce the risk of lithium precipitation on the electrode assembly 22 caused by an excessive reduction in the negative electrode active substance layer 2211 of the negative electrode plate 221, thus achieving good capacity and safety performance of the battery cell 20 at the same time.

According to the invention, still referring to FIG 5, width of the first electrolyte storage trough 2212 is less than width of the second electrolyte storage trough 2222.

The width of the first electrolyte storage trough 2212 is less than the width of the second electrolyte storage trough 2222, meaning that the width of the second electrolyte storage trough 2222 disposed on the positive electrode active substance layer 2221 is greater than the width of the first electrolyte storage trough 2212 disposed on the negative electrode active substance layer 2211.

Optionally, a projection of the first electrolyte storage trough 2212 is within a projection of the second electrolyte storage trough 2222 in the first direction X.

The width of the first electrolyte storage trough 2212 is set to be greater than the width of the second electrolyte storage trough 2222, so that in the region where the first electrolyte storage trough 2212 and the second electrolyte storage trough 2222 are disposed opposite each other, area of the negative electrode active substance layer 2211 is larger than that of the positive electrode active substance layer 2221. In this way, the negative electrode active substance layer 2211 in this region is abundant to accommodate and receive lithium ions precipitated from the positive electrode active substance layer 2221, This can reduce local lithium precipitation of the electrode assembly 22 during subsequent usage, thus helping reduce the safety risk of the battery cell 20 and extend the cycle life of the battery cell 20. In addition, the electrode assembly 22 with such structure can satisfy manufacturing tolerances, so that misplacement of the first electrolyte storage trough 2212 and the second electrolyte storage trough 2222 can be effectively reduced during winding or stacking of the negative electrode plate 221 and the positive electrode plate 222, thus reducing the risk of lithium precipitation in the region where the first electrolyte storage trough 2212 is located.

According to some embodiments of this invention, still referring to FIG 5, depth of the first electrolyte storage trough 2212 is the same as depth of the second electrolyte storage trough 2222.

The depths of the first electrolyte storage trough 2212 and the second electrolyte storage trough 2222 are set to be the same, which facilitates manufacturing and production. In addition, on the premise that the width of the first electrolyte storage trough 2212 is less than the width of the second electrolyte storage trough 2222, the unit active substance density of the negative electrode active substance layer 2211 is ensured to be greater than that of the positive electrode active substance layer 2221 in the region where the first electrolyte storage trough 2212 and the second electrolyte storage trough 2222 are located, helping further reduce the risk of lithium precipitation on the electrode assembly 22 during subsequent usage.

According to some embodiments of this invention, still referring to FIG 5, a difference between the width of the first electrolyte storage trough 2212 and the width of the second electrolyte storage trough 2222 is not less than 1 mm.

The difference between the width of the first electrolyte storage trough 2212 and the width of the second electrolyte storage trough 2222 is not less than 1 mm, meaning that a value of the width of the second electrolyte storage trough 2222 minus the width of the first electrolyte storage trough 2212 is greater than or equal to 1 mm. For example, in FIG 5, the width of the second electrolyte storage trough 2222 is W1, the width of the first electrolyte storage trough 2212 is W1, and a value of W2 minus W1 is greater than or equal to 1 mm.

The difference between the width of the first electrolyte storage trough 2212 and the width of the second electrolyte storage trough 2222 is set to be not less than 1 mm, so that the negative electrode active substance layer 2211 in this region is so abundant that the negative electrode active substance layer 2211 has sufficient active sites for accommodating and receiving the lithium ions precipitated from the positive electrode active substance layer 2221.

According to some embodiments of this application, still referring to FIG 5, a ratio of the depth of the first electrolyte storage trough 2212 to thickness of the negative electrode active substance layer 2211 is 0.01-0.2; and/or a ratio of the depth of the second electrolyte storage trough 2222 to thickness of the positive electrode active substance layer 2221 is 0.01-0.2.

The ratio of the depth of the first electrolyte storage trough 2212 to the thickness of the negative electrode active substance layer 2211 is 0.01-0.2, meaning that the depth of the first electrolyte storage trough 2212 is 1%-20% of the thickness of the negative electrode active substance layer 2211. The ratio of the depth of the second electrolyte storage trough 2222 to the thickness of the positive electrode active substance layer 2221 is 0.01-0.2, meaning that the depth of the second electrolyte storage trough 2222 is 1%-20% of the thickness of the positive electrode active substance layer 2221.

The ratio of the depth of the first electrolyte storage trough 2212 to the thickness of the negative electrode active substance layer 2211 is set to be 0.01-0.2; and likewise, the ratio of the depth of the second electrolyte storage trough 2222 to the thickness of the positive electrode active substance layer 2221 is set to be 0.01-0.2. This can alleviate the problem of poor electrolyte storage effect caused by the first electrolyte storage trough 2212 and the second electrolyte storage trough 2222 being excessively shallow, and can also reduce the difficulty of using the active substances on the bottom walls of the first electrolyte storage trough 2212 and the second electrolyte storage trough 2222 during charging and discharging caused by the first electrolyte storage trough 2212 and the second electrolyte storage trough 2222 being excessively deep, thus helping reduce polarization of the electrode assembly 22.

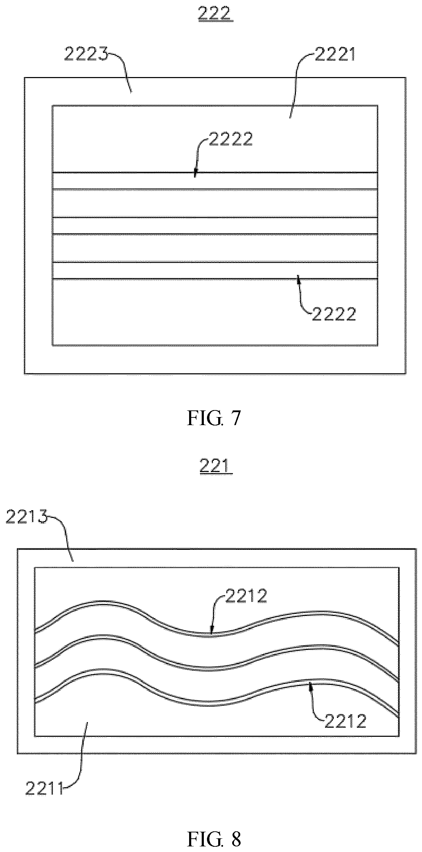

According to some embodiments of this application, referring to FIG 6 and FIG 7, FIG 6 is a schematic structural diagram of a negative electrode plate 221 of an electrode assembly 22 according to some embodiments of this application, and FIG 7 is a schematic structural diagram of a positive electrode plate 222 of an electrode assembly 22 according to some embodiments of this application. In an extending direction of the first electrolyte storage trough 2212, the first electrolyte storage trough 2212 runs through two ends of the negative electrode active substance layer 2211; and/or in an extending direction of the second electrolyte storage trough 2222, the second electrolyte storage trough 2222 runs through two ends of the positive electrode active substance layer 2221.

In the extending direction of the first electrolyte storage trough 2212, the first electrolyte storage trough 2212 runs through the two ends of the negative electrode active substance layer 2211, which means that the first electrolyte storage trough 2212 is an open trough disposed on the negative electrode active substance layer 2211. Likewise, in the extending direction of the second electrolyte storage trough 2222, the second electrolyte storage trough 2222 runs through the two ends of the positive electrode active substance layer 2221, which means that the second electrolyte storage trough 2222 is an open trough disposed on the positive electrode active substance layer 2221.

For example, in FIG 6 and FIG 7, both the first electrolyte storage trough 2212 and the second electrolyte storage trough 2222 are straight open troughs. In other embodiments, referring to FIG 8, FIG 8 is a schematic structural diagram of a negative electrode plate 221 of an electrode assembly 22 according to some embodiments of this application in other embodiments. The first electrolyte storage trough 2212 may alternatively be a curved open trough; likewise, the second electrolyte storage trough 2222 may also be a curved open trough. Such structure can increase the lengths of the first electrolyte storage trough 2212 and the second electrolyte storage trough 2222, thus helping improve the electrolyte storage capability.

Both the first electrolyte storage trough 2212 and the second electrolyte storage trough 2222 are open troughs, so that electrolyte can enter the first electrolyte storage trough 2212 and the second electrolyte storage trough 2222 from both ends of the first electrolyte storage trough 2212 and the second electrolyte storage trough 2222. This helps increase the reflux rate of electrolyte during the discharging process, allowing the negative electrode plate 221 and the positive electrode plate 222 to be fully immersed in the electrolyte, thus further alleviating the polarization of the electrode assembly 22.

According to some embodiments of this application, the extending direction of the first electrolyte storage trough 2212 is the same as the extending direction of the second electrolyte storage trough 2222.

The extending direction of the first electrolyte storage trough 2212 being the same as the extending direction of the second electrolyte storage trough 2222 means that the first electrolyte storage trough 2212 and the second electrolyte storage trough 2222 are arranged along the same direction.

The first electrolyte storage trough 2212 and the second electrolyte storage trough 2222 extend in the same direction, facilitating manufacturing and production of the electrode assembly 22 and allowing the first electrolyte storage trough 2212 and the second electrolyte storage trough 2222 to be disposed opposite each other in the first direction X.

According to some embodiments of this application, still referring to FIG 6 and FIG 7, the first electrolyte storage trough 2212 extends in a length direction of the negative electrode plate 221. The second electrolyte storage trough 2222 extends in a length direction of the positive electrode plate 222.

According to some embodiments of this application, still referring to FIG 6 and FIG 7, in a width direction of the negative electrode active substance layer 2211, the first electrolyte storage trough 2212 is disposed at a center position of the negative electrode active substance layer 2211. In a width direction of the positive electrode active substance layer 2221, the second electrolyte storage trough 2222 is disposed at a center position of the positive electrode active substance layer 2221.

The first electrolyte storage trough 2212 is disposed at the center position in the width direction of the negative electrode active substance layer 2211, and the second electrolyte storage trough 2222 is disposed at the center position in the width direction of the positive electrode active substance layer 2221, which can improve the electrolyte storage and retention capability at the center positions of the negative electrode active substance layer 2211 and the positive electrode active substance layer 2221, thus improving the electrolyte immersion rate at the center positions of the negative electrode active substance layer 2211 and the positive electrode active substance layer 2221.

According to some embodiments of this application, still referring to FIG 6 and FIG 7, both the first electrolyte storage trough 2212 and the second electrolyte storage trough 2222 are provided in plurality. The plurality of first electrolyte storage troughs 2212 are spaced apart in a width direction of the negative electrode plate 221, and the plurality of second electrolyte storage troughs 2222 are spaced apart in a width direction of the positive electrode plate 222, the first electrolyte storage troughs 2212 corresponding to the second electrolyte storage troughs 2222 on a one-to-one basis.

Both the first electrolyte storage trough 2212 and the second electrolyte storage trough 2222 are provided in plurality. In the width direction of the negative electrode active substance layer 2211, at least one of the plurality of first electrolyte storage troughs 2212 is disposed at the center position of the negative electrode active substance layer 2211. Likewise, in the width direction of the positive electrode active substance layer 2221, at least one of the plurality of second electrolyte storage troughs 2222 is disposed at the center position of the positive electrode active substance layer 2221.

The first electrolyte storage trough 2212 and the second electrolyte storage trough 2222 may each be provided in a quantity of 2, 3, 4, 5, and so on. For example, in FIG 6 and FIG 7, three first electrolyte storage trough 2212 and three second electrolyte storage trough 2222 are provided.

A plurality of first electrolyte storage troughs 2212 are spaced apart in the width direction of the negative electrode plate 221, and correspondingly a plurality of second electrolyte storage troughs 2222 are spaced apart in the width direction of the positive electrode plate 222. This helps further improve the electrolyte storage and retention capability of the negative electrode active substance layer 2211 and the positive electrode active substance layer 2221, allowing the negative electrode active substance layer 2211 and the positive electrode active substance layer 2221 to be fully immersed in the electrolyte during the discharging process, thus helping reduce safety risks such as lithium precipitation of the electrode assembly 22.

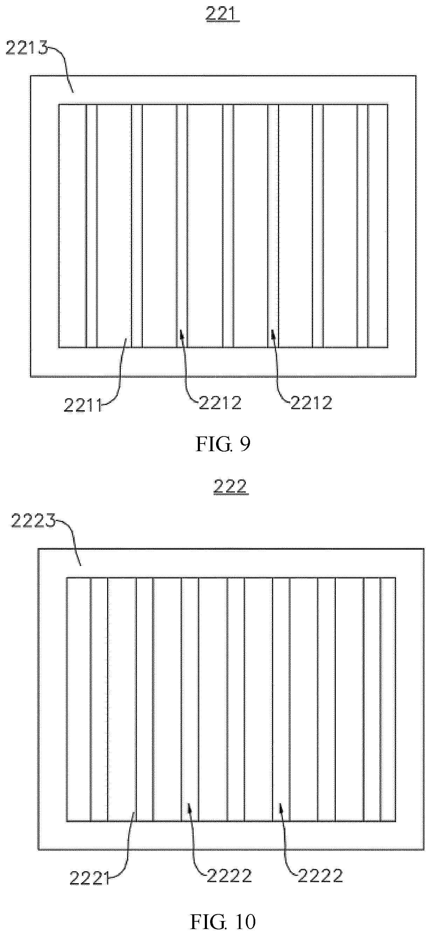

According to some embodiments of this application, referring to FIG 9 and FIG 10, FIG 9 is a schematic structural diagram of a negative electrode plate 221 of an electrode assembly 22 according to some other embodiments of this application, and FIG 10 is a schematic structural diagram of a positive electrode plate 222 of an electrode assembly 22 according to some other embodiments of this application. The first electrolyte storage trough 2212 extends in the width direction of the negative electrode plate 221. The second electrolyte storage trough 2222 extends in the width direction of the positive electrode plate 222.

According to some embodiments of this application, still referring to FIG 9 and FIG 10, both the first electrolyte storage trough 2212 and the second electrolyte storage trough 2222 are provided in plurality. The plurality of first electrolyte storage troughs 2212 are spaced apart in the length direction of the negative electrode plate 221, and the plurality of second electrolyte storage troughs 2222 are spaced apart in the length direction of the positive electrode plate 222, and the first electrolyte storage troughs 2212 corresponding to the second electrolyte storage troughs 2222 on a one-to-one basis.

The first electrolyte storage trough 2212 and the second electrolyte storage troughs 2222 may each be provided in a quantity of 2, 3, 4, 5, 6, and so on. For example, in FIG 9 and FIG 10, seven first electrolyte storage troughs 2212 and seven second electrolyte storage troughs 2222 are provided. The seven first electrolyte storage troughs 2212 are spaced apart in the length direction of the negative electrode plate 221, and the seven second electrolyte storage troughs 2222 are spaced apart in the length direction of the positive electrode plate 222.

A plurality of first electrolyte storage troughs 2212 are spaced apart in the length direction of the negative electrode plate 221, and correspondingly a plurality of second electrolyte storage troughs 2222 are spaced apart in the length direction of the positive electrode plate 222. This helps further improve the electrolyte storage and retention capability of the negative electrode active substance layer 2211 and the positive electrode active substance layer 2221, allowing the negative electrode active substance layer 2211 and the positive electrode active substance layer 2221 to be fully immersed in the electrolyte during the discharging process, thus helping reduce safety risks such as lithium precipitation of the electrode assembly 22.

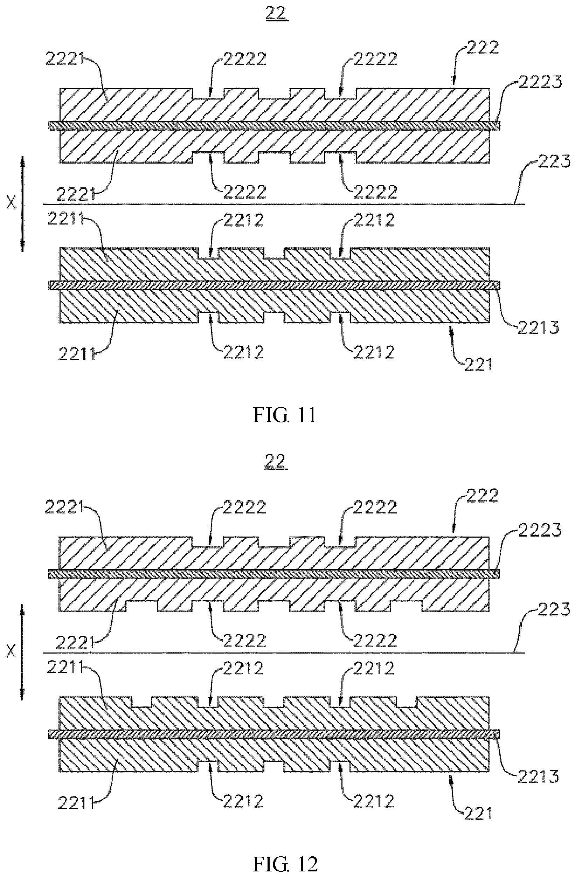

According to some embodiments of this invention, referring to FIG 11, FIG 11 is a partial cross-sectional view of an electrode assembly 22 according to still some other embodiments of this application. The negative electrode plate 221 further includes a negative electrode current collector 2213, and the negative electrode current collector 2213 is provided with the negative electrode active substance layer 2211 on both sides in the first direction X. The positive electrode plate 222 further includes a positive electrode current collector 2223, and the positive electrode current collector 2223 is provided with the positive electrode active substance layer 2221 on both sides in the first direction X.

For example, the negative electrode plate 221 is provided with three first electrolyte storage troughs 2212 on both sides of the negative electrode active substance layer 2211 in the first direction X, and correspondingly the positive electrode plate 222 is provided with three second electrolyte storage troughs 2222 on both sides of the positive electrode active substance layer 2221 in the first direction X, so that the first electrolyte storage troughs 2212 and the second electrolyte storage troughs 2222 are in one-to-one correspondence between the adjacent negative electrode plate 221 and positive electrode plate 222. Certainly, the structure of the electrode assembly 22 is not limited thereto. In other embodiments, referring to FIG 12, FIG 12 is a partial cross-sectional view of an electrode assembly 22 according to still some other embodiments of this invention in other embodiments. Different quantities of first electrolyte storage troughs 2212 are disposed on two sides of the negative electrode plate 221 in the first direction X, and correspondingly different quantities of second electrolyte storage troughs 2222 are disposed on two sides of the positive electrode plate 222 in the first direction X. For example, in FIG 12, three first electrolyte storage troughs 2212 are disposed on one side of the negative electrode plate 221, and five on the other side. Correspondingly, five second electrolyte storage troughs 2222 are disposed on one side of the positive electrode plate 222, and three on the other side.

The negative electrode current collector 2213 is provided with the negative electrode active substance layer 2211 on both sides in the first direction X, so that the negative electrode plate 221 is provided with the first electrolyte storage trough 2212 on both sides in the first direction X. Likewise, the positive electrode current collector 2223 is provided with the positive electrode active substance layer 2221 on both sides in the first direction X, so that the positive electrode plate 222 is provided with the second electrolyte storage trough 2222 on both sides in the first direction X. This can improve the reflux rate and immersion rate of electrolyte on both sides of the negative electrode plate 221 and the positive electrode plate 222 in the first direction X, thus extending the cycle life of the electrode assembly 22 while guaranteeing the energy density of the electrode assembly 22.

According to some embodiments of this application, this application further provides a battery cell 20 including a housing 21 and the electrode assembly 22 in any one of the foregoing solutions. The housing 21 is configured to accommodate the electrode assembly 22.

According to some embodiments of this application, this application further provides a battery 100 including a box 10 and the battery cells 20 in any one of the foregoing solutions. The box 10 is configured to accommodate the battery cells 20.

According to some embodiments of this application, this application further provides an electric apparatus including the battery 100 in any one of the foregoing solutions. The battery 100 is configured to supply electric energy to the electric apparatus.

The electric apparatus may be any one of the foregoing devices or systems that use the battery 100.

According to some embodiments of this application, referring to FIG4 to FIG 7, this application provides an electrode assembly 22. The electrode assembly 22 includes a separator 223, a negative electrode plate 221, and a positive electrode plate 222. The separator 223 is disposed between the negative electrode plate 221 and the positive electrode plate 222. The negative electrode plate 221 includes a negative electrode current collector 2213 and a negative electrode active substance layer 2211 disposed on a side of the negative electrode current collector 2213. A plurality of first electrolyte storage troughs 2212 are disposed on the negative electrode active substance layer 2211, and the plurality of first electrolyte storage troughs 2212 are spaced apart in a width direction of the negative electrode plate 221 and extend in a length direction of the negative electrode plate 221. The positive electrode plate 222 includes a positive electrode current collector 2223 and a positive electrode active substance layer 2221 disposed on a side of the positive electrode current collector 2223. The positive electrode active substance layer 2221 and the negative electrode active substance layer 2211 are disposed opposite each other in a first direction X. A plurality of second electrolyte storage troughs 2222 are disposed on the positive electrode active substance layer 2221, and the plurality of second electrolyte storage troughs 2222 are spaced apart in a width direction of the positive electrode plate 222 and extend in a length direction of the positive electrode plate 222. The second electrolyte storage troughs 2222 and the first electrolyte storage troughs 2212 are disposed opposite each other in the first direction X and in one-to-one correspondence. The depth of the first electrolyte storage trough 2212 is the same as that of the second electrolyte storage trough 2222, but width of the first electrolyte storage trough 2212 is less than that of the second electrolyte storage trough 2222. The electrode assembly 22 with such structure can store electrolyte. On the one hand, the electrolyte retention capability of the negative electrode plate 221 and the positive electrode plate 222 can be improved, so that the electrolyte in the first electrolyte storage trough 2212 and the second electrolyte storage trough 2222 can be released fast during a discharging process to immerse the negative electrode active substance layer 2211 and the positive electrode active substance layer 2221 in the nearby area. This ensures that the negative electrode plate 221 and the positive electrode plate 222 are fully immersed, thus reducing the polarization risk of the negative electrode plate 221 and the positive electrode plate 222. On the other hand, the first electrolyte storage trough 2212 occupies less space on the negative electrode active substance layer 2211 of the negative electrode plate 221 and the second electrolyte storage trough 2222 occupies less space on the positive electrode active substance layer 2221 of the positive electrode plate 222 while the same electrolyte storage effects are achieved. This helps alleviate the problem of energy density loss of the electrode assembly 22 caused by an excessive reduction in the positive electrode active substance layer 2221 of the positive electrode plate 222, and helps reduce the risk of lithium precipitation on the electrode assembly 22 caused by an excessive reduction in the negative electrode active substance layer 2211 of the negative electrode plate 221, thus achieving good capacity and safety performance of the battery cell 20 at the same time.

## Claims

1. An electrode assembly (22), comprising:
a negative electrode plate (221), wherein the negative electrode plate (221) comprises a negative electrode active substance layer (2211), and a first electrolyte storage trough (2212) is disposed on the negative electrode active substance layer (2211); and
a positive electrode plate (222), wherein the positive electrode plate (222) comprises a positive electrode active substance layer (2221), the positive electrode active substance layer (2221) and the negative electrode active substance layer (2211) are disposed opposite each other in a first direction (X),
a second electrolyte storage trough (2222) is disposed on the positive electrode active substance layer (2221),
the second electrolyte storage trough (2222) and the first electrolyte storage trough (2212) are disposed opposite each other in the first direction (X), **characterized in that**
the width of the first electrolyte storage trough (2212) is less than the width of the second electrolyte storage trough (2222).

2. The electrode assembly (22) according to claim 1, wherein depth of the first electrolyte storage trough (2212) is the same as depth of the second electrolyte storage trough (2222).

3. The electrode assembly (22) according to claim 2, wherein a difference between the width of the first electrolyte storage trough (2212) and the width of the second electrolyte storage trough (2222) is at least 1 mm.

4. The electrode assembly (22) according to any one of claims 1 to 3, wherein
a ratio of the depth of the first electrolyte storage trough (2212) to thickness of the negative electrode active substance layer (2211) is 0.01-0.2; and/or
a ratio of the depth of the second electrolyte storage trough (2222) to thickness of the positive electrode active substance layer (2221) is 0.01-0.2.

5. The electrode assembly (22) according to any one of claims 1 to 4, wherein in an extending direction of the first electrolyte storage trough (2212), the first electrolyte storage trough (2212) runs through two ends of the negative electrode active substance layer (2211); and/or
in an extending direction of the second electrolyte storage trough (2222), the second electrolyte storage trough (2222) runs through two ends of the positive electrode active substance layer (2221).

6. The electrode assembly (22) according to any one of claims 1 to 5, wherein an extending direction of the first electrolyte storage trough (2212) is the same as an extending direction of the second electrolyte storage trough (2222).

7. The electrode assembly (22) according to any one of claims 1 to 6, wherein the first electrolyte storage trough (2212) extends in a length direction of the negative electrode plate (221); and
the second electrolyte storage trough (2222) extends in a length direction of the positive electrode plate (222).

8. The electrode assembly (22) according to claim 7, wherein in a width direction of the negative electrode active substance layer (2211), the first electrolyte storage trough (2212) is disposed at a center position of the negative electrode active substance layer (2211); and
in a width direction of the positive electrode active substance layer (2221), the second electrolyte storage trough (2222) is disposed at a center position of the positive electrode active substance layer (2221).

9. The electrode assembly (22) according to claim 7 or 8, wherein both the first electrolyte storage trough (2212) and the second electrolyte storage trough (2222) are provided in plurality; and
the plurality of first electrolyte storage troughs (2212) are spaced apart in a width direction of the negative electrode plate (221), and the plurality of second electrolyte storage troughs (2222) are spaced apart in a width direction of the positive electrode plate (222), the first electrolyte storage troughs (2212) corresponding to the second electrolyte storage troughs (2222) on a one-to-one basis.

10. The electrode assembly (22) according to any one of claims 1 to 6, wherein the first electrolyte storage trough (2212) extends in a width direction of the negative electrode plate (221); and
the second electrolyte storage trough (2222) extends in a width direction of the positive electrode plate (222); optionally both the first electrolyte storage trough (2212) and the second electrolyte storage trough (2222) are provided in plurality; and
the plurality of first electrolyte storage troughs (2212) are spaced apart in a length direction of the negative electrode plate (221), and the plurality of second electrolyte storage troughs (2222) are spaced apart in a length direction of the positive electrode plate (222), the first electrolyte storage troughs (2212) corresponding to the second electrolyte storage troughs (2222) on a one-to-one basis.

11. The electrode assembly (22) according to any one of claims 1 to 10, wherein the negative electrode plate (221) further comprises a negative electrode current collector (2213), and the negative electrode current collector (2213) is provided with the negative electrode active substance layer (2211) on both sides in the first direction (X); and
the positive electrode plate (222) further comprises a positive electrode current collector (2223), and the positive electrode current collector (2223) is provided with the positive electrode active substance layer (2221) on both sides in the first direction (X).

12. A battery cell (20), comprising:
the electrode assembly (22) according to any one of claims 1 to 11; and
a housing (21), wherein the housing (21) is configured to accommodate the electrode assembly (22).

13. A battery (100), comprising:
the battery cells (20) according to claim 12; and
a box (10), wherein the box (10) is configured to accommodate the battery cells (20).

14. An electric apparatus, comprising the battery (100) according to claim 13, wherein the battery (100) is configured to supply electric energy.

## Patentansprüche

1. Elektrodenanordnung (22), umfassend:
eine negative Elektrodenplatte (221), wobei die negative Elektrodenplatte (221) eine negative Elektroden-Aktivsubstanzschicht (2211) umfasst und eine erste Elektrolyt-Speicherrinne (2212) auf der negativen Elektroden-Aktivsubstanzschicht (2211) angeordnet ist; und
eine positive Elektrodenplatte (222), wobei die positive Elektrodenplatte (222) eine positive Elektroden-Aktivsubstanzschicht (2221) umfasst, wobei die positive Elektroden-Aktivsubstanzschicht (2221) und die negative Elektroden-Aktivsubstanzschicht (2211) in einer ersten Richtung (X) einander gegenüberliegend angeordnet sind,
wobei eine zweite Elektrolyt-Speicherrinne (2222) auf der positiven Elektroden-Aktivsubstanzschicht (2221) angeordnet ist,
wobei die zweite Elektrolyt-Speicherrinne (2222) und die erste Elektrolyt-Speicherrinne (2212) in der ersten Richtung (X) einander gegenüberliegend angeordnet sind,
**dadurch gekennzeichnet, dass**
die Breite der ersten Elektrolyt-Speicherrinne (2212) kleiner ist als die Breite der zweiten Elektrolyt-Speicherrinne (2222).

2. Elektrodenanordnung (22) nach Anspruch 1, wobei die Tiefe der ersten Elektrolyt-Speicherrinne (2212) gleich der Tiefe der zweiten Elektrolyt-Speicherrinne (2222) ist.

3. Elektrodenanordnung (22) nach Anspruch 2, wobei eine Differenz zwischen der Breite der ersten Elektrolyt-Speicherrinne (2212) und der Breite der zweiten Elektrolyt-Speicherrinne (2222) mindestens 1 mm beträgt.

4. Elektrodenanordnung (22) nach einem der Ansprüche 1 bis 3, wobei
ein Verhältnis der Tiefe der ersten Elektrolyt-Speicherrinne (2212) zur Dicke der negativen Elektroden-Aktivsubstanzschicht (2211) 0,01-0,2 beträgt; und/oder
ein Verhältnis der Tiefe der zweiten Elektrolyt-Speicherrinne (2222) zur Dicke der positiven Elektroden-Aktivsubstanzschicht (2221) 0,01-0,2 beträgt.

5. Elektrodenanordnung (22) nach einem der Ansprüche 1 bis 4, wobei in einer Erstreckungsrichtung der ersten Elektrolyt-Speicherrinne (2212) die erste Elektrolyt-Speicherrinne (2212) durch zwei Enden der negativen Elektroden-Aktivsubstanzschicht (2211) hindurch verläuft; und/oder
wobei in einer Erstreckungsrichtung der zweiten Elektrolyt-Speicherrinne (2222) die zweite Elektrolyt-Speicherrinne (2222) durch zwei Enden der positiven Elektroden-Aktivsubstanzschicht (2221) hindurch verläuft.

6. Elektrodenanordnung (22) nach einem der Ansprüche 1 bis 5, wobei eine Erstreckungsrichtung der ersten Elektrolyt-Speicherrinne (2212) gleich einer Erstreckungsrichtung der zweiten Elektrolyt-Speicherrinne (2222) ist.

7. Elektrodenanordnung (22) nach einem der Ansprüche 1 bis 6, wobei sich die erste Elektrolyt-Speicherrinne (2212) in einer Längsrichtung der negativen Elektrodenplatte (221) erstreckt; und
wobei sich die zweite Elektrolyt-Speicherrinne (2222) in einer Längsrichtung der positiven Elektrodenplatte (222) erstreckt.

8. Elektrodenanordnung (22) nach Anspruch 7, wobei in einer Breitenrichtung der negativen Elektroden-Aktivsubstanzschicht (2211) die erste Elektrolyt-Speicherrinne (2212) an einer Mittelposition der negativen Elektroden-Aktivsubstanzschicht (2211) angeordnet ist; und
wobei in einer Breitenrichtung der positiven Elektroden-Aktivsubstanzschicht (2221) die zweite Elektrolyt-Speicherrinne (2222) an einer Mittelposition der positiven Elektroden-Aktivsubstanzschicht (2221) angeordnet ist.

9. Elektrodenanordnung (22) nach Anspruch 7 oder 8, wobei sowohl die erste Elektrolyt-Speicherrinne (2212) als auch die zweite Elektrolyt-Speicherrinne (2222) in Mehrzahl vorgesehen sind; und
wobei die mehreren ersten Elektrolyt-Speicherrinnen (2212) in einer Breitenrichtung der negativen Elektrodenplatte (221) voneinander beabstandet sind und die mehreren zweiten Elektrolyt-Speicherrinnen (2222) in einer Breitenrichtung der positiven Elektrodenplatte (222) voneinander beabstandet sind, wobei die ersten Elektrolyt-Speicherrinnen (2212) den zweiten Elektrolyt-Speicherrinnen (2222) eins zu eins entsprechen.

10. Elektrodenanordnung (22) nach einem der Ansprüche 1 bis 6, wobei sich die erste Elektrolyt-Speicherrinne (2212) in einer Breitenrichtung der negativen Elektrodenplatte (221) erstreckt; und
wobei sich die zweite Elektrolyt-Speicherrinne (2222) in einer Breitenrichtung der positiven Elektrodenplatte (222) erstreckt; optional sind sowohl die erste Elektrolyt-Speicherrinne (2212) als auch die zweite Elektrolyt-Speicherrinne (2222) in Mehrzahl vorgesehen; und
wobei die mehreren ersten Elektrolyt-Speicherrinnen (2212) in einer Längsrichtung der negativen Elektrodenplatte (221) voneinander beabstandet sind und die mehreren zweiten Elektrolyt-Speicherrinnen (2222) in einer Längsrichtung der positiven Elektrodenplatte (222) voneinander beabstandet sind, wobei die ersten Elektrolyt-Speicherrinnen (2212) den zweiten Elektrolyt-Speicherrinnen (2222) eins zu eins entsprechen.

11. Elektrodenanordnung (22) nach einem der Ansprüche 1 bis 10, wobei die negative Elektrodenplatte (221) ferner einen negativen Elektroden-Stromkollektor (2213) umfasst und der negative Elektroden-Stromkollektor (2213) auf beiden Seiten in der ersten Richtung (X) mit der negativen Elektroden-Aktivsubstanzschicht (2211) versehen ist; und
wobei die positive Elektrodenplatte (222) ferner einen positiven Elektroden-Stromkollektor (2223) umfasst und der positive Elektroden-Stromkollektor (2223) auf beiden Seiten in der ersten Richtung (X) mit der positiven Elektroden-Aktivsubstanzschicht (2221) versehen ist.

12. Batteriezelle (20), umfassend:
die Elektrodenanordnung (22) nach einem der Ansprüche 1 bis 11; und
ein Gehäuse (21), wobei das Gehäuse (21) dazu ausgelegt ist, die Elektrodenanordnung (22) aufzunehmen.

13. Batterie (100), umfassend:
die Batteriezellen (20) nach Anspruch 12; und
einen Kasten (10), wobei der Kasten (10) dazu ausgelegt ist, die Batteriezellen (20) aufzunehmen.

14. Elektrische Vorrichtung, umfassend die Batterie (100) nach Anspruch 13, wobei die Batterie (100) dazu ausgelegt ist, elektrische Energie zu liefern.

## Revendications

1. Ensemble d'électrodes (22), comprenant :
une plaque d'électrode négative (221), dans lequel la plaque d'électrode négative (221) comprend une couche de substance active d'électrode négative (2211), et une première rainure de stockage d'électrolyte (2212) est disposée sur la couche de substance active d'électrode négative (2211) ; et
une plaque d'électrode positive (222), dans lequel la plaque d'électrode positive (222) comprend une couche de substance active d'électrode positive (2221), la couche de substance active d'électrode positive (2221) et la couche de substance active d'électrode négative (2211) étant disposées l'une en face de l'autre dans une première direction (X),
une seconde rainure de stockage d'électrolyte (2222) étant disposée sur la couche de substance active d'électrode positive (2221),
la seconde rainure de stockage d'électrolyte (2222) et la première rainure de stockage d'électrolyte (2212) étant disposées l'une en face de l'autre dans la première direction (X),
**caractérisé en ce que**
la largeur de la première rainure de stockage d'électrolyte (2212) est inférieure à la largeur de la seconde rainure de stockage d'électrolyte (2222).

2. Ensemble d'électrodes (22) selon la revendication 1, dans lequel la profondeur de la première rainure de stockage d'électrolyte (2212) est identique à la profondeur de la seconde rainure de stockage d'électrolyte (2222).

3. Ensemble d'électrodes (22) selon la revendication 2, dans lequel une différence entre la largeur de la première rainure de stockage d'électrolyte (2212) et la largeur de la seconde rainure de stockage d'électrolyte (2222) est d'au moins 1 mm.

4. Ensemble d'électrodes (22) selon l'une quelconque des revendications 1 à 3, dans lequel
un rapport de la profondeur de la première rainure de stockage d'électrolyte (2212) à l'épaisseur de la couche de substance active d'électrode négative (2211) est de 0,01 à 0,2 ; et/ou
un rapport de la profondeur de la seconde rainure de stockage d'électrolyte (2222) à l'épaisseur de la couche de substance active d'électrode positive (2221) est de 0,01 à 0,2.

5. Ensemble d'électrodes (22) selon l'une quelconque des revendications 1 à 4, dans lequel, dans une direction d'extension de la première rainure de stockage d'électrolyte (2212), la première rainure de stockage d'électrolyte (2212) traverse deux extrémités de la couche de substance active d'électrode négative (2211) ; et/ou
dans une direction d'extension de la seconde rainure de stockage d'électrolyte (2222), la seconde rainure de stockage d'électrolyte (2222) traverse deux extrémités de la couche de substance active d'électrode positive (2221).

6. Ensemble d'électrodes (22) selon l'une quelconque des revendications 1 à 5, dans lequel une direction d'extension de la première rainure de stockage d'électrolyte (2212) est identique à une direction d'extension de la seconde rainure de stockage d'électrolyte (2222).

7. Ensemble d'électrodes (22) selon l'une quelconque des revendications 1 à 6, dans lequel la première rainure de stockage d'électrolyte (2212) s'étend dans une direction longitudinale de la plaque d'électrode négative (221) ; et
la seconde rainure de stockage d'électrolyte (2222) s'étend dans une direction longitudinale de la plaque d'électrode positive (222).

8. Ensemble d'électrodes (22) selon la revendication 7, dans lequel, dans une direction de largeur de la couche de substance active d'électrode négative (2211), la première rainure de stockage d'électrolyte (2212) est disposée à une position centrale de la couche de substance active d'électrode négative (2211) ; et
dans une direction de largeur de la couche de substance active d'électrode positive (2221), la seconde rainure de stockage d'électrolyte (2222) est disposée à une position centrale de la couche de substance active d'électrode positive (2221).

9. Ensemble d'électrodes (22) selon la revendication 7 ou 8, dans lequel à la fois la première rainure de stockage d'électrolyte (2212) et la seconde rainure de stockage d'électrolyte (2222) sont prévues en pluralité ; et
la pluralité de premières rainures de stockage d'électrolyte (2212) sont espacées les unes des autres dans une direction de largeur de la plaque d'électrode négative (221), et la pluralité de secondes rainures de stockage d'électrolyte (2222) sont espacées les unes des autres dans une direction de largeur de la plaque d'électrode positive (222), les premières rainures de stockage d'électrolyte (2212) correspondant aux secondes rainures de stockage d'électrolyte (2222) selon une relation biunivoque.

10. Ensemble d'électrodes (22) selon l'une quelconque des revendications 1 à 6, dans lequel la première rainure de stockage d'électrolyte (2212) s'étend dans une direction de largeur de la plaque d'électrode négative (221) ; et
la seconde rainure de stockage d'électrolyte (2222) s'étend dans une direction de largeur de la plaque d'électrode positive (222) ; facultativement, à la fois la première rainure de stockage d'électrolyte (2212) et la seconde rainure de stockage d'électrolyte (2222) sont prévues en pluralité ; et
la pluralité de premières rainures de stockage d'électrolyte (2212) sont espacées les unes des autres dans une direction longitudinale de la plaque d'électrode négative (221), et la pluralité de secondes rainures de stockage d'électrolyte (2222) sont espacées les unes des autres dans une direction longitudinale de la plaque d'électrode positive (222), les premières rainures de stockage d'électrolyte (2212) correspondant aux secondes rainures de stockage d'électrolyte (2222) selon une relation biunivoque.

11. Ensemble d'électrodes (22) selon l'une quelconque des revendications 1 à 10, dans lequel la plaque d'électrode négative (221) comprend en outre un collecteur de courant d'électrode négative (2213), et le collecteur de courant d'électrode négative (2213) est pourvu de la couche de substance active d'électrode négative (2211) sur les deux côtés dans la première direction (X) ; et
la plaque d'électrode positive (222) comprend en outre un collecteur de courant d'électrode positive (2223), et le collecteur de courant d'électrode positive (2223) est pourvu de la couche de substance active d'électrode positive (2221) sur les deux côtés dans la première direction (X).

12. Cellule de batterie (20), comprenant :
l'ensemble d'électrodes (22) selon l'une quelconque des revendications 1 à 11 ; et
un boîtier (21), dans lequel le boîtier (21) est configuré pour loger l'ensemble d'électrodes (22),

13. Batterie (100), comprenant :
les cellules de batterie (20) selon la revendication 12 ; et
un caisson (10), dans lequel le caisson (10) est configuré pour loger les cellules de batterie (20).

14. Appareil électrique, comprenant la batterie (100) selon la revendication 13, dans lequel la batterie (100) est configurée pour fournir de l'énergie électrique.
